Europäisches Patentamt

European Patent Office

Office européen des brevets

(11) Numéro de publication : **0 319 354 B1**

## (12) FASCICULE DE BREVET EUROPEEN

(51) Int. Cl.⁵ : **F16H 57/02, F16H 1/26**

(45) Date de publication du fascicule du brevet :
13.03.91 Bulletin 91/11

(21) Numéro de dépôt : **88402667.5**

(22) Date de dépôt : **21.10.88**

---

(54) **Dispositif d'entraînement d'une couronne dentée par pignon flottant auto-alignant.**

---

(30) Priorité : **02.12.87 FR 8716728**

(43) Date de publication de la demande :
**07.06.89 Bulletin 89/23**

(45) Mention de la délivrance du brevet :
**13.03.91 Bulletin 91/11**

(84) Etats contractants désignés :
**AT DE ES GB IT**

(56) Documents cités :
**FR-A- 344 482**
**FR-A- 1 230 485**
**FR-A- 1 317 441**
**FR-A- 2 002 300**

(73) Titulaire : **ENGRENAGES ET REDUCTEURS CITROEN - MESSIAN - DURAND Société Anonyme**
**3, rue Latécoère B.P. 43**
**F-78142 Velizy-Villacoublay Cédex (FR)**

(72) Inventeur : **Millard, Jean-Claude**
**12 Rue Creuse**
**F-58000 Nevers (FR)**
Inventeur : **Piechocki, Gérard,**
**76 Avenue Pasteur**
**F-78630 Orgeval (FR)**

(74) Mandataire : **Lanceplaine, Jean-Claude et al**
**CABINET LAVOIX 2, Place d'Estienne d'Orves**
**F-75441 Paris Cédex 09 (FR)**

---

EP 0 319 354 B1

---

Jouve, 18, rue Saint-Denis, 75001 PARIS

## Description

La présente invention a pour objet un dispositif d'entraînement d'une couronne dentée par un pignon flottant auto-alignant, destiné notamment à l'entraînement à basse vitesse d'une couronne dentée de grandes dimensions.

On sait que pour transmettre, par un pignon monté dans des paliers fixes, un mouvement de rotation à une couronne à denture extérieure de grand diamètre sur laquelle la précision de réalisation est difficile à obtenir à cause des dimensions importantes, il est pratiquement impossible d'obtenir une bonne portance des flancs de denture sur toute la largeur taillée.

En effet, la couronne dentée est fixée sur un arbre ou sur un tube dont la précision de centrage, comme de rotation est variable à cause des déformations dues à la flexibilité du matériel et aux variations des efforts transmis ainsi qu'aux dilatations par changement de température, ce qui provoque une détérioration rapide de ces matériels.

Pour ces raisons, on connaît dans le FR-A-1 230 485, un dispositif d'entraînement d'une couronne dentée dans lequel le pignon moteur flottant est monté à l'intérieur d'un chariot comportant des galets qui roulent sur des pistes concentriques à la denture de la couronne dentée et maintiennent ainsi radialement le chariot sur ladite couronne dentée à l'entraxe de fonctionnement. Ce chariot est maintenu fixe par une barre d'attelage située dans le plan médian des dentures et fixé, d'une part, à une articulation sur le chariot et relié, d'autre part, à une partie fixe, par une chape à rotule.

On connaît également, dans le FR-A-1 464 558, un dispositif dans lequel le pignon flottant est monté dans un support qui prend appui par trois barres articulées à leurs extrémités. Deux de ces barres sont sensiblement parallèles au plan formé par les axes des pignons et de la couronne et sont situées de part et d'autre de la couronne et du plan précité et les pistes extérieures de la couronne sont situées de part et d'autre de la denture ou au centre du taillage.

Généralement, dans les dispositifs utilisés jusqu'à présent, la couronne dentée et le pignon moteur engrènent ensemble à l'aide d'une denture droite.

Or, dans les dentures droites utilisées pour ce genre de matériel, le frottement des dentures changent de sens lorsque le point de contact se déplace progressivement du pied de dent au sommet de dent en passant par le cercle primitif de fonctionnement où le frottement s'annule et s'inverse. Le changement de sens de glissement produit un décalage angulaire de l'effort de contact de part et d'autre de la ligne d'action, ce qui produit une variation de charges radiales très élevée à chaque passage de dent à dent.

Cette variation de charges radiales supportée par les galets provoque une ondulation des pistes de la couronne sur lesquelles roulent les galets du chariot supportant le pignon moteur, ce qui génère des vibrations sur ledit chariot et donne donc de très mauvaises conditions d'utilisation, si bien qu'après un certain temps de fonctionnement, il est nécessaire de rectifier les pistes de la couronne.

Pour éviter l'ondulation des pistes de la couronne, de nombreux constructeurs ont augmenté la largeur des pistes pour abaisser la pression sur les galets, mais cette modification étant appliquée à des couronnes de grandes dimensions, augmente considérablement leur poids, leur usinage et globalement leur coût de réalisation.

La présente invention a donc pour but d'éviter ces inconvénients et a pour objet un dispositif d'entraînement d'une couronne dentée par un pignon flottant moteur monté à l'intérieur d'un chariot comportant des galets qui roulent sur des pistes intérieures concentriques à la denture de la couronne dentée et maintiennent radialement le chariot sur ladite couronne dentée à l'entraxe de fonctionnement par un organe élastique, caractérisé en ce que le pignon moteur et la couronne dentée ont un déport de denture de telle sorte que le diamètre maximum des profils de contact de la couronne dentée soit plus petit que le diamètre primitif de fonctionnement de ladite couronne dentée ce qui produit en fonctionnement un seul sens de glissement sur les dentures.

Selon une autre caractéristique de l'invention, l'organe élastique de maintien des galets en contact sur les pistes intérieures de la couronne dentée est constitué par une béquille élastique de traction agissant sur le chariot.

L'invention sera mieux comprise à l'aide de la description qui va suivre, donnée uniquement à titre d'exemple et faite en se référant aux dessins annexés, sur lesquels :
 – la Fig. 1 est une vue schématique d'une couronne dentée et d'un pignon moteur engrénant ensemble à l'aide d'une denture droite selon les réalisations antérieures de ce type de matériel,
 – la Fig. 2 est une vue schématique d'une couronne dentée et d'un pignon moteur selon l'invention,
 – la Fig. 3 est une vue en plan du dispositif d'entraînement selon l'invention,
 – la Fig. 4 est une vue en coupe selon la ligne 4-4 de la Fig. 3,
 – la Fig. 5 est un diagramme qui représente la variation de l'effort de contact dynamique en fonction de l'angle d'inclinaison de la barre d'attelage.

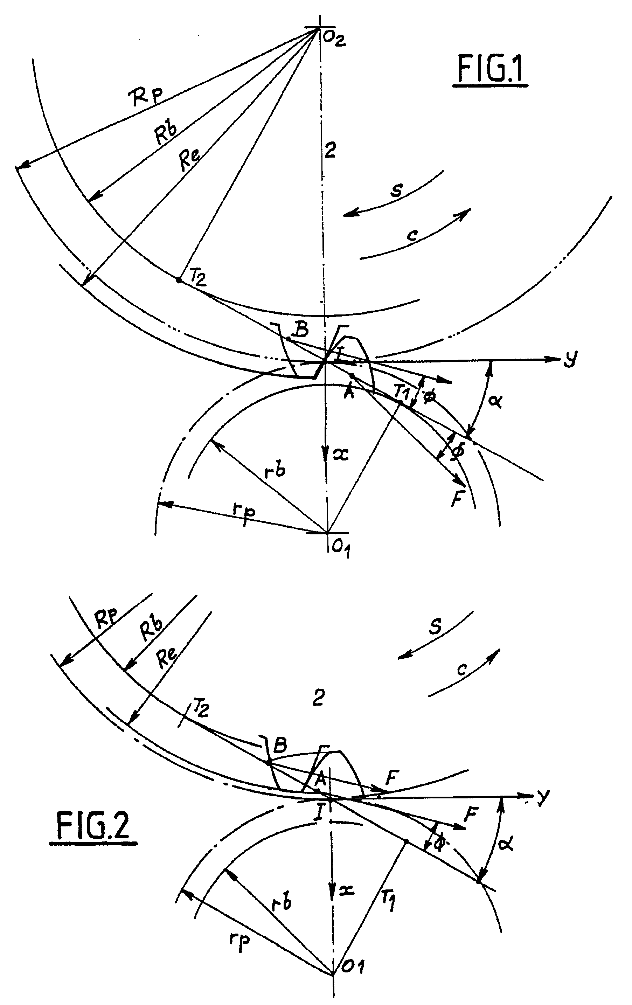

En se référant tout d'abord à la Fig. 1, on va examiner l'effort de contact entre le pignon moteur flottant 1 et la couronne dentée 2 de grandes dimensions transmis par une dent et de la réaction qu'il provoque sur les galets radiaux supportant ledit pignon moteur.

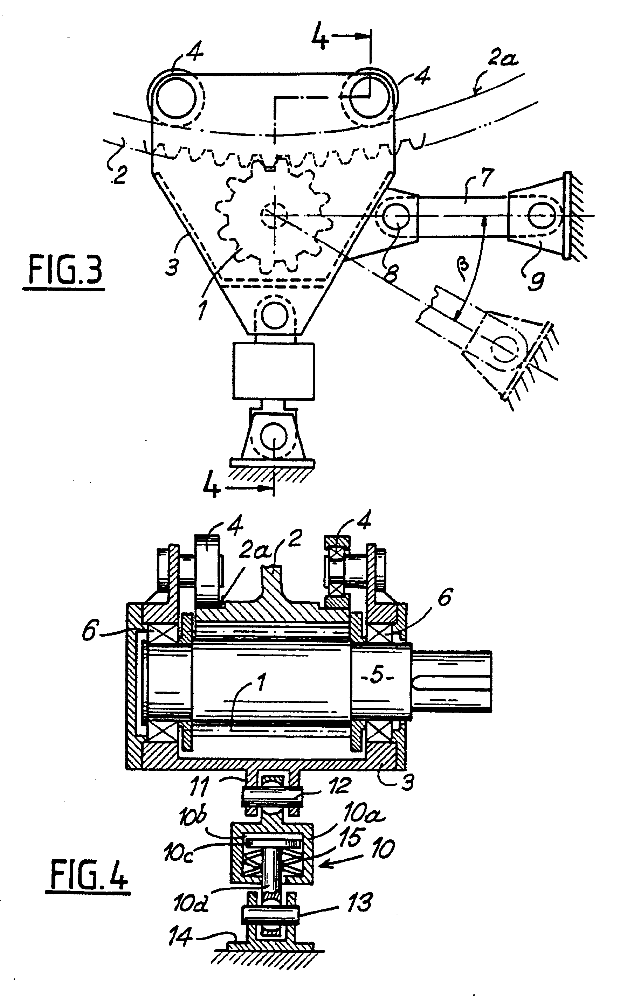

D'une manière générale, le pignon moteur flottant 1 est monté à l'intérieur d'un chariot 3 (Fig. 3) comportant des galets 4 qui roulent sur des pistes 2a concentriques à la denture de la couronne dentée et maintiennent ainsi radialement le chariot 3 sur ladite couronne dentée à l'entraxe de fonctionnement à l'aide d'un organe élastique.

Sur la Fig. 1, selon l'art antérieure, le pignon moteur 1 et la couronne 2 engrènent ensemble à l'aide d'une denture droite dont les caractéristiques géométriques des dentures et les valeurs des efforts transmis sont désignés par :

O1 = axe de pignon
O2 = axe de couronne
I = point de contact des dentures sur les cercles primitifs de fonctionnement
A = point de contact sur un rayon plus grand que Rp
B = point de contact sur un rayon plus petit que Rp
Rp = rayon primitif de fonctionnement de la couronne dentée
Re = rayon de tête de dent de couronne dentée (rayon maximum des profils de contact)
rp = rayon primitif de fonctionnement du pignon
Rb = rayon de base de la couronne
$\alpha$ = angle de pression de denture ($\alpha = 20°$)
$\phi$ = angle de frottement des dentures
tg $\phi$ = coefficient de frottement des dentures
T1T2 = ligne d'action de l'engrenage
C = couple résistant appliqué sur la couronne
S = sens de rotation de la couronne
Fn = effort de contact statique des dentures
F = effort de contact dynamique des dentures (décalé de l'angle de frottement).

Dans les dentures droites utilisées jusqu'à présent dans ce genre de matériel, le frottement des dentures change de sens lorsque le point de contact se déplace progressivement du pied de dent au sommet de dent en passant par le cercle primitif (point I) où le frottement s'annule et s'inverse. Le changement de sens de glissement produit un décalage angulaire de l'effort de contact de part et d'autre de la ligne d'action T1, T2 (cône de frottement).

Pour un couple résistant constant C sur la couronne 2 à transmettre par le pignon 1 sur ladite couronne par l'effort de contact dynamique F, suivant la position du contact décrit ci-dessus, l'effort F aura comme valeur :

$$F = \frac{C}{Rp.\cos(\alpha + \phi) - IA \sin \phi}$$

dans la zone de contact IA.

$$F = \frac{C}{Rp.\cos(\alpha - \phi) + IB \sin \phi}$$

dans la zone de contact IB.

Le deuxième terme des dénominateurs (IA sin $\phi$ et IB sin $\phi$) contribue à augmenter l'écart entre les deux valeurs de F dans les zones IA et IB. Mais, étant donné que ces termes peuvent prendre des valeurs proches de zéro, lorsque les points de contact se rapprochent du point I, on n'en tiendra pas compte en première approximation et on prendra la valeur simplifiée :

$$F = \frac{C}{Rp.\cos(\alpha \pm \phi)}$$

pour les deux zones IA et IB.

Pour connaître les efforts dûs à l'engrènement, appliqué sur les éléments de maintien radiaux du pignon 1 sur la couronne 2, il faut et il suffit de prendre la projection de cette valeur sur l'axe OX, soit :

$$Fx = F.\sin(\alpha \pm \phi) = \frac{C.\sin(\alpha \pm \phi)}{Rp.\cos(\alpha \pm \phi)} = \frac{C}{Rp}.tg(\alpha \pm \phi)$$

Cette valeur Fx contient deux termes constants, C et Rp et un terme variable tg $(\alpha \pm \phi)$ où l'angle de frottement $\phi$ change de sens.

Le rapport des deux valeurs de Fx dans les zones de contact IA et IB s'écrit :

$$\frac{tg(\alpha + \phi)}{tg(\alpha - \phi)}$$

Les valeurs du coefficient de frottement (tg$\phi$) en fonction de différents paramètres tels que charge, vitesse, lubrification, etc... et pour des engrenages fonctionnant à basse vitesse, se situent aux alentours de 0,07 à 0,08, mais peuvent atteindre 0,15 pour de très basses vitesses.

En prenant, par exemple, la valeur minimum de tg$\phi$, soit 0,07 et $\alpha = 20°$ correspondant à une denture normalisée, on constate que le rapport des deux valeurs de Fx dans les zones IA et IB prend la valeur :

$$\frac{tg(\alpha + \phi)}{tg(\alpha - \phi)} = 1,55$$

ce qui représente la variation de charge sur les galets 4.

Cette variation de charge est très élevée et peut dépasser nettement la valeur 1,55 pour des valeurs de tg $\phi$ supérieures à 0,07. Cette variation de charge se produisant à chaque passage de dent à dent, provoque une ondulation des pistes 2a de la couronne 2, ce qui génère des vibrations sur le chariot 3 comprenant le pignon moteur 1 et donne donc de très mauvaises conditions de fonctionnement.

Pour éviter la formation d'ondulations sur les pistes de la couronne, le pignon moteur 1 et la couronne dentée 2 selon la présente invention, ont un déport de denture, ce qui permet un fonctionnement avec un seul sens de glissement et, de ce fait, la suppression des variations de charge de dent à dent sur les galets de maintien du pignon sur la couronne.

Sur la Fig. 2, où la désignation des éléments est identique à la Fig. 1, le pignon 1 et la couronne 2 ont une denture du type "en retraite", de telle sorte que le diamètre maximum de contact de la couronne soit plus petit que le diamètre primitif de fonctionnement de ladite couronne.

En effet, les deux points A et B de contact de la denture sont situés du même côté du point de contact I sur la droite T1T2, donc sur un rayon plus petit que le rayon primitif Rp de fonctionnement de la couronne dentée, ce qui provoque un seul sens de glissement d'où l'absence de variation d'efforts sur les éléments de maintien radiaux du pignon 1, puisque Fx s'écrit alors :

4

$$\frac{C}{Rp} \; tg \; (\alpha - \phi)$$

quelle que soit la position de contact des dentures.

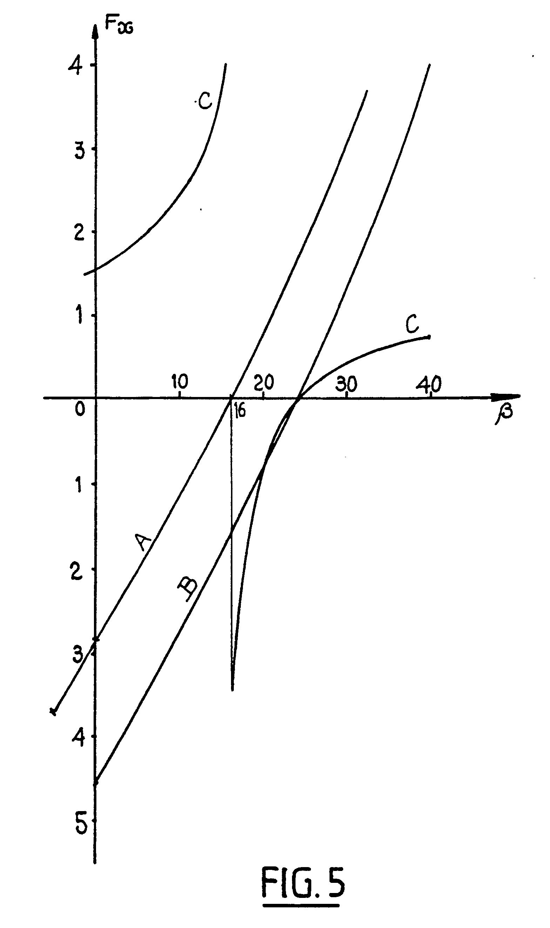

Comme représenté sur les Fig. 3 et 4, le pignon 1 est solidaire d'un arbre moteur 5 qui tourillonne dans le chariot 3 par l'intermédiaire de roulements 6.

Le chariot 3 comporte à sa partie supérieure quatre galets 4 symétriques deux à deux, qui roulent sur les pistes 2a ménagées sur la face interne de la couronne 2 et concentriques à la denture de ladite couronne.

Le chariot 3 est maintenu par une barre d'attelage 7 située dans le plan médian des dentures et fixé, d'une part, à une articulation 8 sur ledit chariot et relié d'autre part à une partie fixe sur une chape à rotule 9.

Par ailleurs, le maintien en contact des galets 4 sur les pistes intérieures 2a, qui fixe l'entraxe de fonctionnement, est réalisé par une béquille élastique de traction 10 située dans le plan médian de la denture de couronne et sur la ligne des centres du pignon 1 et de la couronne 2. La béquille élastique de traction 10 agit sur le chariot 3 de manière que le rodage ou l'usure des pistes et galets ne provoquent qu'une augmentation de l'entraxe de fonctionnement ce qui permet de conserver un fonctionnement avec un seul sens de glissement, étant donné que dans le cas d'usure, l'écart entre le diamètre maximum des profils de contact de la couronne dentée et le diamètre primitif de fonctionnement augmente. Par contre, si une usure quelconque provoque une diminution de l'entraxe de fonctionnement, l'écart mentionné ci-dessus diminue et peut s'inverser (diamètre maximum des profils de contact plus grand que le diamètre primitif de fonctionnement), ce qui dans ce cas, ramène le fonctionnement à deux sens de glissement. Cette remarque est importante étant donné que l'écart théorique entre le diamètre primitif de fonctionnement et le diamètre maximum des profils de contact de couronne est faible.

La partie inférieure du chariot 3 est munie d'une chape 11 reliée à une extrémité de la béquille 10 par un axe 12. La béquille 10 est constituée par un cylindre 10a articulé sur l'axe 12 et comportant une chambre interne 10b à l'intérieur de laquelle coulisse un piston 10c. Ce piston 10c se prolonge par une tige 10d qui débouche à l'extérieur de la chambre interne 10b et dont l'extrémité est articulée par un axe 13 sur une chape 14 reliée à une partie fixe.

Des rondelles Belleville sont intercalées entre le piston 10c et le fond de la chambre interne 10b de façon à exercer une traction sur le chariot 3 et maintenir en contact les galets 4 sur les pistes intérieures 2a de la couronne dentée 2.

Cette béquille de traction est nécessaire lorsque la position du chariot 3 sur la couronne dentée 2 est telle qu'une composante de son poids propre puisse annuler l'effort de séparation des dentures, donc modifier l'entraxe de fonctionnement qui n'est dans ce cas limité que par le contact des deux profils conjugués des dentures. Ce phénomène peut se produire pour chaque variation de couple, c'est-à-dire par exemple, au démarrage ou au freinage ou encore au moment d'une accélération ou une décélération, et provoquer de fortes perturbations.

La description de l'invention qui vient d'être donnée se rapporte à un cas particulier où la barre d'attelage 7 est parallèle à l'axe Oy (Figs 1 et 2). Sur différents types d'appareils à fonctionnement particulier, comme par exemple un treuil où il n'y a qu'un seul sens de couple à transmettre sur la couronne, la barre d'attelage 7 peut être inclinée d'un angle β (figure 3) pour diminuer les charges sur les galets 4. Mais, dans ce cas, avec une denture normale à deux sens de glissement, le rapport des valeurs Fx dans les zones de contact IA et IB croît considérablement.

Cela apparaît sur le diagramme de la Fig. 5 qui représente la variation de Fx en fonction de l'angle β et où l'axe des abcisses représente les variations de l'angle β et l'axe des ordonnées la variation des valeurs de Fx.

Les courbes A et B représentent les variations de Fx en fonction de l'angle β d'après la formule

$$Fx = \frac{C}{Rp} \left[ tg \; \beta - tg(\alpha \pm \phi) \right]$$

où il a été donné à $\frac{C}{Rp}$ une valeur constante de 10 et avec (tg $\alpha - \phi$) = 16° pour la courbe A et (tg $\alpha + \phi$) = 24° pour la courbe B.

Les courbes C représentent la variation des charges Fx représentée par le rapport des valeurs de courbe A et B.

L'examen de ces courbes fait apparaître l'excitation importante (courbes C) produite par le changement de sens de glissement sur les dentures à deux sens de glissement et montre l'intérêt de l'utilisation de dentures à un seul sens de glissement pour ce type de matériel qui est flottant, donc très sensible aux excitations vibratoires, ce qui représente une caractéristique essentielle de la présente invention.

L'utilisation d'un pignon moteur et d'une couronne dentée possédant un déport de denture qui permet un fonctionnement avec un seul sens de glissement sur les dentures, évite donc la formation d'ondulations sur les pistes de la couronne dentée, ce qui améliore de manière très sensible les conditions d'utilisation du dispositif.

## Revendications

1. Dispositif d'entraînement d'une couronne dentée (2) par un pignon flottant moteur (1) monté à l'intérieur d'un chariot (3) comportant des galets (4) qui roulent sur des pistes intérieures (2a) concentriques à la denture de la couronne dentée (2) et maintiennent radialement le chariot (3) sur ladite couronne dentée à l'entraxe de fonctionnement par un organe élastique (10), caractérisé en ce que le pignon moteur (1) et la couronne dentée (2) ont un déport de denture de telle sorte que le diamètre maximum des profils de contact de la couronne dentée soit plus petit que la diamètre primitif de fonctionnement de ladite couronne, ce qui produit en fonctionnement un seul sens de glissement sur les dentures.

2. Dispositif d'entraînement selon la revendication 1, caractérisé en ce que l'organe élastique de maintien des galets (4) en contact sur les pistes intérieures (2a) de la couronne (2) est constitué par une béquille élastique de traction (10) agissant sur le chariot (3).

3. Dispositif d'entraînement selon la revendication 2, caractérisé en ce que la béquille élastique de traction (10) est située dans le plan médian de la denture de la couronne (2) et sur la ligne des centres du pignon (1) et de ladite couronne (2).

4. Dispositif d'entraînement selon les revendications 1 et 2, caractérisé en ce que la béquille élastique de traction (10) est constituée par un cylindre (10a) articulé sur le chariot (3) et comportant une chambre interne (10b) à l'intérieur de laquelle coulisse un piston (10c) se prolongeant par une tige (10d) dont l'extrémité est articulée sur une chape (14) reliée à une partie fixe.

5. Dispositif d'entraînement selon la revendication 4, caractérisé en ce que la chambre interne (10b) comporte des rondelles Belleville (15) intercalées entre le piston (10c) et le fond de ladite chambre.

## Ansprüche

1. Antriebsvorrichtung eines Zahnkranzes (2) mittels eines antreibenden fliegenden Ritzels (1), das im Inneren eines Gestells (3) angeordnet ist, mit Rollkörpern (4), die auf inneren Bahnen (2a) konzentrisch zu den Zähnen des Zahnkranzes (2) rollen und radial das Gestell (3) auf dem Zahnkranz im Betriebsachsabstand durch ein elastisches Organ (10) halten, **dadurch gekennzeichnet,** daß das Antriebsritzel (1) und der Zahnkranz (2) eine Zahnteilung derart aufweisen, daß der max. Durchmesser des Wälzkreises des Zahnkranzes kleiner ist als der einfache Teilkreisdurchmesser des Zahnkranzes, was im Betrieb eine einzige Gleitrichtung auf den Zähnen erzeugt.

2. Antriebsvorrichtung nach Anspruch 1, **dadurch gekennzeichnet,** daß das elastische Organ zum Halten der Rollkörper (4) in Berührung mit den inneren Bahnen (2a) des Kranzes (2) durch eine elastische Antriebsstütze (10) gebildet wird, die auf das Gestell (3) wirkt.

3. Antriebsvorrichtung nach Anspruch 2, **dadurch gekennzeichnet,** daß die elastische Antriebsstütze (10) in der Mittenebene der Zähne des Kranzes (2) und auf der Linie der Zentren des Ritzels (1) und des Kranzes (2) angeordnet ist.

4. Antriebsvorrichtung nach Anspruch 1 und 2, **dadurch gekennzeichnet,** daß die elastische Antriebsstütze (10) durch einen an dem Gestell (3) angelenkten Zylinder (10a) gebildet wird, und eine innere Kammer (10b) aufweist, in deren Innerem ein Kolben (10c) gleitet, der von einer Stange (10d) verlängert wird, deren Ende an einer Abdeckkappe (14) angelenkt ist, die mit einem festen Bereich verbunden ist.

5. Antriebsvorrichtung nach Anspruch 4, **dadurch gekennzeichnet,** daß die innere Kammer (10b) "Belleville"-Scheiben (15) aufweist, die zwischen dem Kolben (10c) und dem Boden der genannten Kammer angeordnet sind.

**Claims**

1. Device for driving a crown gear (2) by a floating motor pinion (1) mounted within a carriage (3) having rollers (4), which roll on internal tracks (2a) concentric to the tooth system of the crown gear (2) and which radially maintain the carriage (3) on said crown gear with the operating distance between centres by an elastic member (10), characterized in that the motor pinion (1) and the crown gear (2) have a tooth system offset, in such a way that the maximum diameter of the contact profiles of the crown gear is smaller than the operating pitch diameter of said crown gear, so that, in operation, there is a single sliding direction on the tooth systems.

2. Drive device according to claim 1, characterized in that the elastic member for keeping the rollers (4) in contact with the internal tracks (2a) of the gear (2) is constituted by an elastic, tension T-handle (10) acting on the carriage (3).

3. Drive device according to claim 2, characterized in that the elastic tension T-handle (10) is located in the median plane of the tooth system of the gear (2) and on the centre line of the pinion (1) and the gear (2).

4. Drive device according to claims 1 and 2, characterized in that the elastic, tension T-handle (10) is constituted by a cylinder (10a) articulated to the carriage (3) and having an internal chamber (10b) within which slides a piston (10c) extended by a rod (10d), whose end is articulated to a yoke (14) connected to a fixed part.

5. Drive device according to claim 4, characterized in that the internal chamber (10b) has cupped washers (15) interposed between the piston (10c) and the bottom of the said chamber.

FIG.1

FIG.2

FIG.3

FIG.4

FIG.5